# EUROPEAN PATENT APPLICATION

(11) **EP 2 830 014 A1**
(43) Date of publication of application: **28.01.2015**
(21) Application number: 13290173.7
(22) Date of filing: 23.07.2013
(51) Int. Cl.: G06Q 30/06, G06Q 10/02, G06Q 20/12, G06Q 20/20, G06Q 20/34, G06Q 20/40, G06Q 20/42, G06Q 20/10

(54) **Secure channel payment processing system and method**

(71) Applicant: Amadeus S.A.S., 06410 Biot (FR)
(72) Inventor: Canis, Laure, 06300 Nice (FR); Florimond, Cedric, 06220 Valbonne (FR)
(74) Representative: Samson & Partner

(57) **Abstract**

The present invention relates to a method and system for performing fraud screening and choosing whether to accept or deny a transaction within any channel. The system may facilitate the fraud screening processing for the case where this channel is the offline card not present channel, which may be utilized for call center transactions. The system may include a server that receives a transaction request and performs a first fraud screening based on transaction information of the requested transaction. The server may further determine which operation to perform: whether to issue a final response right away (accept, reject) or whether to gather more information before issuing a final response. The information gathering may be an authentication method only usable in another channel (online channel or offline card present channel). The server may create an asynchronous payment, which secures the reservation of the good, while allowing performing the new channel authentication at a later time. Depending on the information gathering results, the server further determines which operation to perform: whether to issue a final response right away (accept, reject) or whether to gather information a second time before issuing a final response. This second information gathering may be a manual review. The system may provide for the selecting an operation flow based on the transaction information.

## Description

### CROSS REFERENCE TO RELATED APPLICATIONS

This application is related to co-pending application no. 13/786,497 titled "Fraud Decision Processing System and Method," the content of which is incorporated by reference in its entirety.

### TECHNICAL FIELD

The present invention relates to a method and a system to perform fraud decision processing for call-center transaction requests.

### BACKGROUND

Merchants need to reduce the number of fraudulent transactions because when a fraud occurs, they are responsible for reimbursing the amounts of fraudulent transactions to the real credit card holder. Thus, a payment system performs a fraud screening to reduce fraud. Based on transaction information such as the amount of the transaction, location of the sale, IP address of the requesting device, whether the credit card is on a black list and even data on repeated transactions with the same credit card number, email, or name (velocity checks), the fraud screening service provider may deny the requested transaction, allow the requested transaction, or direct the requester for manual review. For a manual review, the system waits for additional information.

In an example of airline ticket purchase, the transaction information may further include the origin, destination, and time before departure.

One type of fraud screening is a non-predictive fraud screening, where the system relies on rules input by the merchant to determine which result to output based on the information at its disposal. The response can be: "Accept", "Deny", "Challenge".

One type of fraud screening is a predictive fraud screening, where the system does not rely on rules input by the merchant to determine which result to output, but builds a predictive model for detecting fraud based on historical information. The system then determines a probability of fraud based on this predictive model and the transaction information.

Another type of fraud-prevention measure is an authentication of the payment instrument, such as a credit card or debit card.

An example of such type of payment instrument authentication is the 3-D Secure® authentication protocol developed by Visa® and adopted by MasterCard®. A password may be provided to user for authentication. One added feature of this type of authentication is the shift in fraud cost. When the payment instrument is enrolled in the 3-D Secure® authentication program and that authentication is performed successfully, the cost of fraud is shifted to the issuing bank of the instrument. Accordingly, merchants are willing to use the 3-D Secure® authentication. Today, this authentication method can only be used for online payments.

Another example of such authentication is the EMV verification process. EMV stands for Europay, MasterCard® and Visa® and is a global standard for inter-operation of integrated circuit cards (IC cards or "chip cards") for authenticating credit and debit card transactions. One implementation of EMV cards confirms the identity of the cardholder by requiring the entry of a PIN (Personal Identification Number). Today, this authentication method can only be used for offline card present, which may include face to face payments.

Both the offline card present channel and the online channel possess an optimal way of processing card payments and minimizing the total cost of fraud. For the offline card present channel, EMV authentication is ideal: fraud rates are low, fraud liability is shifted to the issuing bank of the instrument, and there are minimal lost sales. For the online channel, the "Fraud Decision Processing System and Method" presented how 3-D Secure® authentication could be combined with fraud screening to considerably improve the final acceptance or rejection decision through additional information. There is a need for a similar process in the case of offline card not present transactions (e.g., in call-centers, where a voice transaction requested may be entered via a telephone).

### SUMMARY

In general, a method and system for computer-implemented secure channel payment processing system, which performs fraud decision processing for offline, where the associated card is not present transaction requests. Such transactions may utilize a call center payment.

The computer-implemented secure channel payment processing system, after an initial fraud screening, may allow the requested transaction right away, deny the requested transaction right away, or require authentication which will be performed through a shift of channel to the online channel or offline card present channel. The choice of which channel shift to use can be based on whether the payee has an internet connection or not. In certain embodiments, the online channel can be used as the default choice, unless the payee has no internet connection, and in this case the offline card present channel will be used.

In the case where authentication is required, depending on the result of authentication, the computer-implemented secure channel payment processing system may allow the requested transaction, deny the requested transaction, or request more information. In the case where more information is requested, depending on the information results, the computer-implemented secure channel payment processing system may finally allow the requested transaction or deny the requested transaction.

In the case where the fraud screening is of a predictive type, the choice of which flow to follow can be based on at least one of the following factors: the probability of fraud output by the predictive fraud screening engine, a cost for processing a chargeback, a cost for gathering more information, a cost of lost sales for a false fraud detection, a probability of causing a timeout for an action performed as part of the information gathering, a false negative rate and a false positive rate of the authentication processes and the manual review process.

In the case where the fraud screening is not of a predictive type, the computer-implemented secure channel payment processing system may allow the requested transaction, deny the requested transaction if the fraud screening engine response is "Accept" or "Deny", or ask for authentication through a channel shift if the response is "Challenge". In the latter case, the computer-implemented secure channel payment processing performs a second call to the fraud screening engine, which gives a response based on the authentication results. This response can be "Accept" or "Deny", in this case the computer-implemented secure channel payment processing system may allow the requested transaction or deny the requested transaction, or it can be "Challenge": in this case information gathering is performed. In the latter case, the computer-implemented secure channel payment processing performs a third call to the fraud screening engine, which gives a final response based on the information gathering results. This response can be "Accept" or "Deny", the computer-implemented secure channel payment processing system may finally allow the requested transaction or deny the requested transaction.

In the case where authentication through another channel, is required, the authentication does not have to be real-time and the booking may be guaranteed until the payment deadline.

In certain embodiments, the authentication for the online channel may be a 3-D Secure® authentication.

In certain embodiments, the authentication for the offline card present channel may be an EMV® authentication.

In certain embodiments, the information gathering may be a manual review.

In certain embodiments, there may even be a fourth alternative after the first fraud screening on top of allowing the requested transaction, denying the requested transaction, or performing an authentication: perform information gathering. In certain embodiments, this information gathering could be a manual review.

In certain embodiments, there may be more than two authentication or information gathering operations before a final acceptance or rejection decision is made.

In certain embodiments, a 3-D Secure® enrollment verification may be performed before the first fraud screening.

The computer-implemented secure channel payment processing system may include a server communicating with a terminal and computer readable medium. The computer-implemented secure channel payment processing system may receive a transaction request which is by voice, and may perform a payment instrument authentication. Based on the payment instrument authentication, the system may perform one of the following functions: allowing the requested transaction; rejecting the requested transaction; and requesting for more information Requesting for more information may include performing a fraud screen with information from the payment instrument authentication. The system may reserve a purchase of the requested transaction before a payment of the requested transaction.

The computer-implemented secure channel payment processing system may perform a fraud screen. Accordingly, the system may perform one of the following functions as a result to the fraud screen: allowing the requested transaction; rejecting the requested transaction; and requesting more information. The computer-implemented secure channel payment processing system may generate asynchronous payment processing in response to the result of the fraud screen. The system may generate asynchronous payment processing when the result of the fraud screen is requesting more information. The function of requesting more information may include performing a payment instrument authentication. The system may perform payment instrument authentication based on a value determined by the fraud screen. The value determined by the fraud screen may be a probability of fraud.

Based on the payment instrument authentication, the system may perform one of the following functions: allowing the requested transaction, and rejecting the requested transaction. Based on the payment instrument authentication, the system performs one of the following functions: allowing the requested transaction, and requesting for more information. Requesting more information includes performing the fraud screen with information from the payment instrument authentication.

In another embodiment, the computer-implemented secure channel payment processing system may include a server communicating with a terminal and a computer readable medium. The system may receive a voice transaction request, and may perform a payment instrument authentication of the requested transaction. Based upon the payment instrument authentication, the system may perform one of the following functions: allowing the requested transaction; and rejecting the requested transaction. Based on the payment system authentication, the system may also perform on of the following functions: allowing the requested transaction; and requesting for more information. Requesting more information may include performing the fraud screen with information from the payment instrument authentication.

In yet another embodiment, the payment processing of the requested transaction may include real-time processing of a payment. The voice transaction request may be made via a call center. The payment processing of the requested transaction may be performed electronically, and also the processing may not be performed electronically.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The details of one or more embodiments are set forth in the following detailed description of the invention and the accompanying drawings. Other objectives, features, and advantages of the invention will be more readily understood upon consideration of the following Detailed Description of the invention, taken in conjunction with the accompanying drawings, and with the claims.

### DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:
FIG. 1 illustrates an embodiment of present invention.
FIGS. 2(A) and 2(B) illustrate flows of embodiments of present invention.
FIG. 3 illustrates one response flow of a payment instrument authentication.

### DETAILED DESCRIPTION OF EXEMPLARY EMBODIMENTS

A detailed explanation of the system and method according to the preferred embodiments of the present invention are described below.

The embodiments may take the form of a hardware embodiment, a software embodiment, or an embodiment combining software and hardware. In one embodiment, the present invention takes the form of a computer-program product that includes computer-useable instructions embodied on one or more computer-readable media.

The various fraud screen and authentication techniques, methods, and systems described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

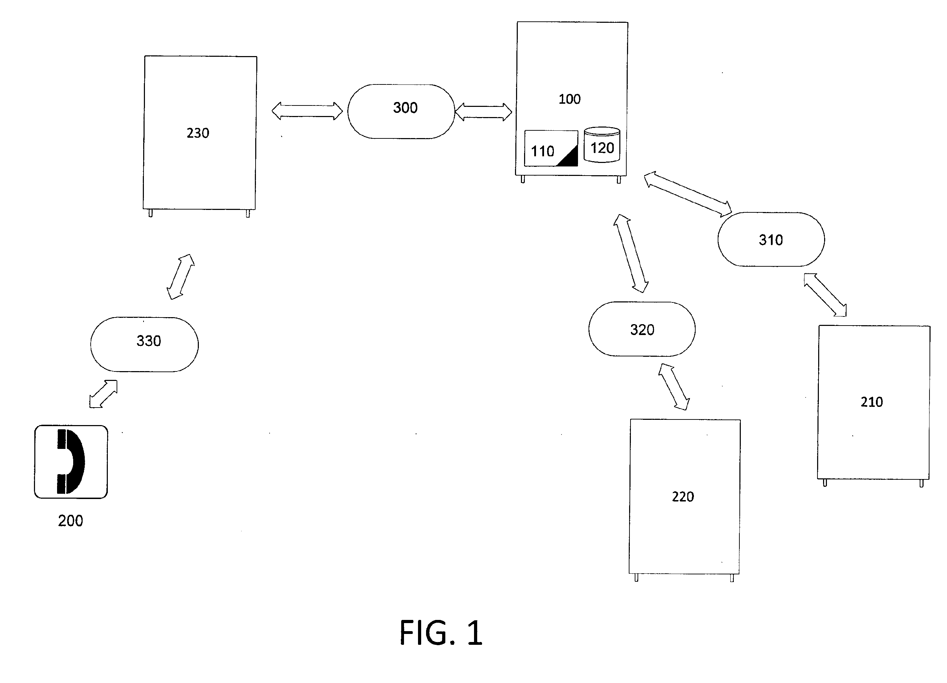

One aspect of the present invention generally directs to a secure channel payment processing system. The secure channel includes one channel having a transaction request inputted or received by voice or audio. Referring to the computer-implemented secure channel payment processing system of FIG 1, the server 100, the client device, which may be a telephone 200, and the processor 110 may include a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer.

In addition, client device, which may be a phone 200 may be or can include a landline phone, a wireless cell phone, a laptop computer or other mobile computing device, or any voice-input device.

The general-purpose computer may include a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network, such as network 300, include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer can include a main memory, preferably random access memory (RAM), and can also include a secondary memory, which may be a tangible computer-readable medium 120. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

Referring to FIG. 1, network 300 can also include a communications interface that allows software and data to be transferred between terminal 200, server 100, and the other components shown. The system components may also be stand-alone components that can communicate with each other, a centralized server 100, and/or the client device over network 300. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media include computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

Computer programs may be associated with applications, which may be stored in the main memory or secondary memory. Such computer programs can also be received via a communications interface. Such computer programs, when executed, may enable the computer system to perform the features as discussed herein. In particular, the computer programs, when executed, may enable the processor to perform the described techniques. Accordingly, such computer programs may represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

Referring to FIG. 1, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server.

One aspect of present invention provides a secure channel payment processing system incorporating fraud screening and/or payment instrument authentication to the offline card not present channel (e.g., audio transaction request). FIG. 1 illustrates a system according to one embodiment of present invention. A payment server 100 includes a processor 110 and a tangible computer-readable medium 120, such as a disk drive or a flash memory system. The tangible computer-readable medium 120 stores programming which directs the processor and the payment server 100 to perform functions discussed below.

A telephone 200 communicates with a call center server 230 via a network 330. The phone 200 may be a landline telephone, cell phone, computer, or other voice-input or audio reproducing devices. Another example is a computer running a telephony app. In general, a telephone 200 is a device capable of inputting a transaction request via interactive voice response (IVR) technology.

A user inputs a voice transaction request via the telephone 200. The network 330 may be, e.g., the internet, public telephone network, and/or a computer network. The network 330 may also be a proprietary or local network. In this embodiment, the call center server 230 receives the voice transaction request via a telephone network (network 330), and uses interactive voice response (IVR) system to receive the voice transaction request.

The payment server 100 communicates with the call center server 230 via a network 300 and receives the transaction request and transaction information. The transaction information includes, inter alia, the payment instrument (e.g. a credit card), and goods and services requested, and the amount of the transaction.

The payment server 100 communicates with a fraud screening service provider server 210 via, e.g., a network 310. The network 310 may be, e.g., the internet a proprietary network, or a local network. The payment server 100 further communicates with an authentication service provider server 220, via a network 320.

In a 3-D Secure® authentication program, the authentication service provider server 220 may be the issuing bank of the payment instrument (e.g. credit card), or a service provider contracted by the issuing bank. The networks 300, 310, and/or 320 may be, e.g., the internet. The networks 300, 310, and/or 320 may also be a proprietary or local network.

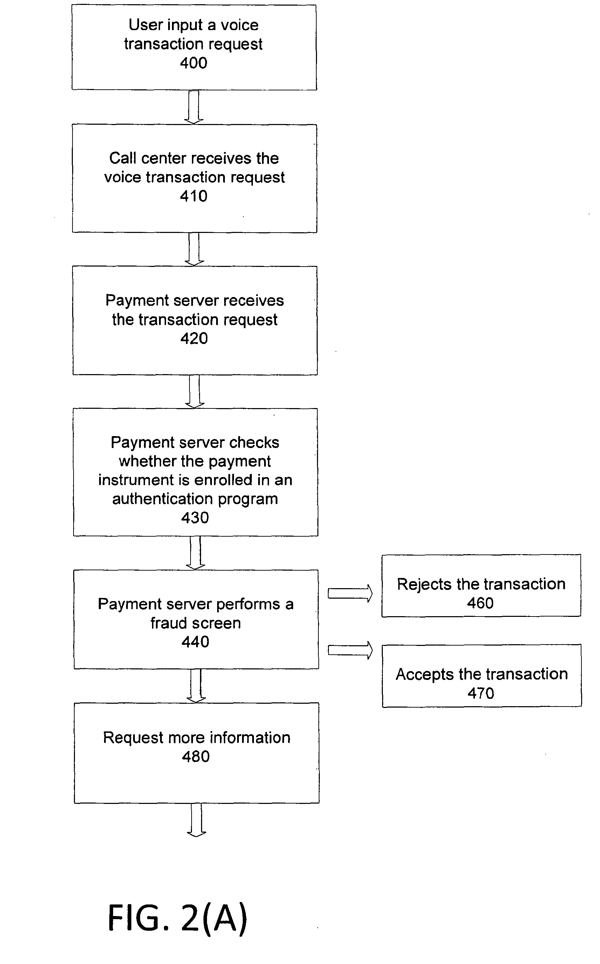

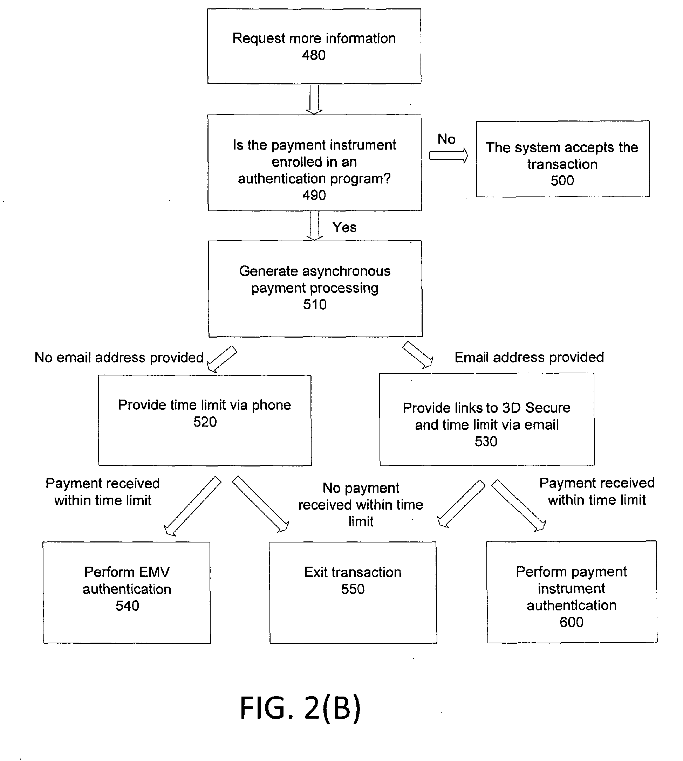

FIGS. 2(A) and 2(B) illustrate a flow diagram in accordance with an embodiment of present invention. The depicted flow processing may be associated with any fraud screening engine, whether the engine be predictive or not. At 400, an offline user may input a voice transaction request (e.g., buying an airline ticket) using the telephone 200. At 410, the call center server 230 receives the voice transaction request via a telephone network (network 330) using interactive voice response (IVR) system. The call center server 230 then transmits the voice transaction request to the payment server 100 via the network 300.

At 420, the payment server 100, by the operation of the processor 110 and tangible computer-readable medium 120, receives request for a transaction (e.g., buying an airline ticket) and transaction information from the call center server 230 via the network 300.

At 430, upon receiving the request for transaction, the payment server 100 verifies whether the payment instrument for the enrolled transaction is enrolled in a payment instrument authentication program such as the 3-D Secure® authentication. In this embodiment, the payment server 100 transmits the transaction information (such as the credit card number) to the authentication service provider server 220, via a network 320. The authentication service provider server 220 responds with a result regarding whether the payment instrument is enrolled in the authentication program.

At 440, the payment server 100 performs the fraud screening by communicating with the fraud screening service provider server 210 via the network 310. Here, in particular, the payment server 100 performs the fraud screening by sending the requested transaction and transaction information to the fraud screen service provider server 210, and receives a result of the fraud screening from the fraud screening service provider server 210. In another embodiment, the payment server 100 includes a fraud screening engine.

The fraud screen engine determines the fraud screening result based on transaction information such as credit card number, amount paid, time of charge, and/or device used for the transaction (such as the IP address for the device). In an example airline ticket purchase, the transaction information may further include the destination, the particular flight, and the origin city.

In the case of a non-predictive fraud screening, the fraud screening returns a result of allowing the transaction (470), rejecting the transaction (460), or requesting more information (480). Generally, the function of gather more information involves a request for more information. Additional information on fraud screen is provided in opening "Fraud Screen System and Method" application.

One aspect of present invention provides that the requesting more information function includes at least one of the features described below. For example, one aspect of present invention provides that the requesting more information function includes a payment instrument authentication such as 3D Secure^{™} authentication.

The fraud screening service provider server 210 transmits a result of the fraud screening to the payment server 100, who will accept the transaction request, reject the transaction request, or gather more information.

See FIG. 2B, for example, at 490, the payment determines the next action in requesting more information function based on whether the payment instrument is enrolled in a payment authentication program (e.g. 3D Secure^{™})(see 430). In a case the payment instrument is not enrolled, the payment server 100 issues an allowance of the requested transaction (500).

At 500, in a case the payment instrument is enrolled in a payment instrument authentication program, the payment server 100 generates an asynchronous processing. One feature of asynchronous processing provides processing payment at a time later than the transaction request. The payment server 100 may further reserve the purchase of the requested transaction before the payment. E.g., in case of an airline ticket purchase, the flight is reserved.

At 520, in a case the user does not provide an email address, the payment server 100 provides the time limit to the user via the call center 230 and telephone 200.

At 550, the user fails to make payment within the time limit, and the system exits the requested transaction. E.g., the payment server cancels all the reservations relating to the requested transaction.

At 520, the user completes the payment before the time limit, and the requested transaction is completed. One example of the payment is real-time, offline card present payment using EMV verification, which may include a face to face payment.

At 530, the user provides an email address, and the payment server 100 provides the time limit and a link to the payment instrument authentication (e.g., 3D Secure^{™}).

At 550, the user fails to make payment within the time limit, and the system exits the requested transaction. E.g., the payment server cancels all the reservations relating to the requested transaction.

The user enters the payment information and accesses payment instrument authentication (600). In one embodiment, the user performs the payment instrument authentication without involving the payment server 100, and the payment instrument authentication server provides the results to the payment server 100. In another embodiment, the payment instrument authentication was conducted via the payment server 100 and the payment instrument authentication server.

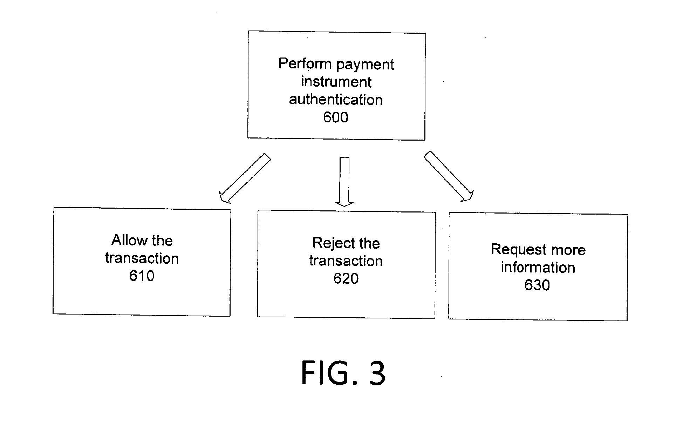

FIG. 3 illustrates a flow diagram when performing the payment instrument authentication. Based on a result from the fraud screen and transaction information (such as the value of the transaction), the payment server or the system selects one of these three responses after the payment instrument authentication.

At 600, payment instrument authentication (such as 3D Secure^{™} authentication) is performed. At 610, the requested transaction is allowed according to the result of payment instrument authentication. At 620, the requested transaction is denied according to the result of payment instrument authentication. At 630, more information is needed (requesting more information). In one embodiment, the requesting more information function includes issuing a request for manual review. More information on fraud screen and payment instrument authentication can be found in co-pending application no. 13/786,497 titled "Fraud Decision Processing System and Method,"

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

In summary, the invention can be characterized by the following aspects:
1. A computer-implemented secure channel payment processing system comprising:
   a server communicating with a terminal; and
   a computer readable medium;
   wherein the computer-implemented secure channel payment processing system:
      receives a transaction request; and
      wherein the transaction request is by voice.
2. The computer-implemented secure channel payment processing system of aspect 1, wherein the system performs a payment instrument authentication.
3. The computer-implemented secure channel payment processing system of aspect 1 or 2,
   wherein based on the payment instrument authentication, the system performs one of the following functions:
   allowing the requested transaction;
   rejecting the requested transaction; and
   requesting for more information
4. The computer-implemented secure channel payment processing system of any one of aspects 1 to 3,
   wherein requesting for more information includes performing a fraud screen with information from the payment instrument authentication.
5. The computer-implemented secure channel payment processing system of any one of aspects 1 to 4,
   wherein the system reserves a purchase of the requested transaction before a payment of the requested transaction.
6. The computer-implemented secure channel payment processing system of any one of aspects 1 to 5, wherein the system performs a fraud screen.
7. The computer-implemented secure channel payment processing system of aspect 6, wherein the system performs one of the following functions as a result to the fraud screen:
   allowing the requested transaction;
   rejecting the requested transaction; and
   requesting more information.
8. The computer-implemented secure channel payment processing system of aspect 7, wherein the system generates the asynchronous payment processing in response to the result of the fraud screen.
9. The computer-implemented secure channel payment processing system of aspect 8, wherein the system generates the asynchronous payment processing when the result of the fraud screen is requesting more information.
10. The computer-implemented secure channel payment processing system of any one of aspects 7 to 9, wherein the function of requesting more information includes performing a payment instrument authentication.
11. The computer-implemented secure channel payment processing system of aspect 10, wherein the system performs the payment instrument authentication based on a value determined by the fraud screen.
12. The computer-implemented secure channel payment processing system of aspect 11, wherein the value determined by the fraud screen is a probability of fraud.
13. The computer-implemented secure channel payment processing system of aspect 10 or 11, wherein based on the payment instrument authentication, the system performs one of the following functions:
   allowing the requested transaction, and
   rejecting the requested transaction.
14. The computer-implemented secure channel payment processing system of any one of aspects 10 to 13, wherein based on the payment instrument authentication, the system performs one of the following functions:
   allowing the requested transaction, and
   requesting for more information.
15. The computer-implemented secure channel payment processing system of aspect 14, wherein requesting more information includes performing the fraud screen with information from the payment instrument authentication.
16. A computer-implemented secure channel payment processing system, optionally according to any one of the aspects I to 15, comprising:
   a server communicating with a terminal; and
   a computer readable medium;
   wherein the computer-implemented secure channel payment processing system:
      receives a voice transaction request; and
      performs a payment instrument authentication of the requested transaction.
17. The computer-implemented secure channel payment processing system of aspect 16, wherein based on the payment instrument authentication, the system performs one of the following functions:
   allowing the requested transaction, and
   rejecting the requested transaction.
18. The computer-implemented secure channel payment processing system of aspect 16 or 17, wherein based on the payment instrument authentication, the system performs one of the following functions:
   allowing the requested transaction, and
   requesting for more information.
19. The computer-implemented secure channel payment processing system of aspect 18, wherein requesting more information includes performing the fraud screen with information from the payment instrument authentication.
20. The computer-implemented secure channel payment processing system of any one of aspects 16 to 19, wherein the system performs a fraud screen.
21. The computer-implemented secure channel payment processing system of aspect 19 or 20, wherein the system performs the payment instrument authentication based on a valued determined by the fraud screen.
22. The computer-implemented secure channel payment processing system of aspect 21, wherein the valued determined by the fraud screen is a probability of fraud.
23. A computer-implemented secure channel payment processing method, comprising:
   receiving, by a computer-implemented secure channel payment processing system, a voice transaction request; and
   generating, by the computer-implemented secure channel payment processing system, an asynchronous payment processing of the requested transaction.
24. The computer-implemented secure channel payment processing method of aspect 23, comprising:
   performing, by the computer-implemented secure channel payment processing system, a payment instrument authentication.
25. The computer-implemented secure channel payment processing method of aspect 24,
   wherein based on the payment instrument authentication, the computer-implemented secure channel payment processing system performs one of the following functions:
   allowing the requested transaction; and
   rejecting the requested transaction.
26. The computer-implemented secure channel payment processing method of aspect 24 or 25,
   wherein based on the payment instrument authentication, the computer-implemented secure channel payment processing system performs one of the following functions:
   allowing the requested transaction; and requesting for more information.
27. The computer-implemented secure channel payment processing method of aspect 26,
   wherein requesting for more information includes performing a fraud screen with information from the payment instrument authentication.
28. The computer-implemented secure channel payment processing method of any one of aspects 23 to 27, comprising:
   reserving, by the computer-implemented secure channel payment processing system, a purchase of the requested transaction before a payment of the requested transaction.
29. The computer-implemented secure channel payment processing method of any one of aspects 23 to 28, comprising:
   performing, by the computer-implemented secure channel payment processing system, a fraud screen.
30. The computer-implemented secure channel payment processing method of aspect 29, wherein the by the computer-implemented secure channel payment processing system performs one of the following functions as a result to the fraud screen:
   allowing the requested transaction;
   rejecting the requested transaction; and
   requesting more information.
31. The computer-implemented secure channel payment processing method of aspect 30, comprising:
   generating, by the computer-implemented secure channel payment processing system, the asynchronous payment processing in response to the result of the fraud screen.
32. The computer-implemented secure channel payment processing method of aspect 31, wherein the system generates the asynchronous payment processing when the result of the fraud screen is requesting more information.
33. The computer-implemented secure channel payment processing method of any one of aspects 30 to 32, wherein the function of requesting more information includes performing a payment instrument authentication.
34. The computer-implemented secure channel payment processing method of aspect 33, wherein the computer-implemented secure channel payment processing system performs the payment instrument authentication based on a value determined by the fraud screen.
35. The computer-implemented secure channel payment processing method of aspect 34, wherein the value determined by the fraud screen is a probability of fraud.
36. The computer-implemented secure channel payment processing method of any one of aspects 33 to 35, wherein based on the payment instrument authentication, the computer-implemented secure channel payment processing performs one of the following functions:
   allowing the requested transaction; and
   rejecting the requested transaction.
37. The computer-implemented secure channel payment processing method of any one of aspects 33 to 36, wherein based on the payment instrument authentication, the computer-implemented secure channel payment processing performs one of the following functions:
   allowing the requested transaction; and
   requesting for more information.
38. The computer-implemented secure channel payment processing method of aspect 37, wherein requesting more information includes performing the fraud screen with information from the payment instrument authentication.
39. A computer-implemented secure channel payment processing method, optionally according to any one of the aspects 23 to 38, comprising:
   receiving, by a computer-implemented secure channel payment processing, a voice transaction request; and
   performing, by the computer-implemented secure channel payment processing, a payment instrument authentication of the requested transaction.
40. The computer-implemented secure channel payment processing method of aspect 39, wherein based on the payment instrument authentication, the computer-implemented secure channel payment processing system performs one of the following functions:
   allowing the requested transaction; and
   rejecting the requested transaction.
41. The computer-implemented secure channel payment processing method of aspect 39 or 40, wherein based on the payment instrument authentication, the computer-implemented secure channel payment processing system performs one of the following functions:
   allowing the requested transaction; and
   requesting for more information.
42. The computer-implemented secure channel payment processing system of any one of aspects 1 to 21, wherein the payment processing of the requested transaction includes real-time processing of a payment.
43. The computer-implemented secure channel payment processing system of any one of aspects 1 to 21, wherein the voice transaction request is made via a call center.
44. The computer-implemented secure channel payment processing system of any one of aspects 1 to 21, wherein the payment processing is performed electronically.
45. The computer-implemented secure channel payment processing system of any one of aspects 1 to 21, wherein the payment processing is not performed electronically.
46. The computer-implemented secure channel payment processing method of any one of aspects 23 to 41 comprising:
   processing a payment of the requested transaction real-time.
47. The computer-implemented secure channel payment processing method of any one of aspects 23 to 41, 46 wherein the voice transaction request is made via a call center.
48. The computer-implemented secure channel payment processing method of any one of aspects 23 to 41, 46, 47 wherein the payment processing is performed electronically.
49. The computer-implemented secure channel payment processing method of any one of aspect 23 to 41, 46 to 48 wherein the payment processing is not performed electronically.

## Claims

1. A computer-implemented secure channel payment processing system comprising:
a server communicating with a terminal; and
a computer readable medium;
wherein the computer-implemented secure channel payment processing system is arranged to:
receive a voice transaction request; and
perform a payment instrument authentication of the requested transaction.

2. The computer-implemented secure channel payment processing system of claim 1, wherein based on the payment instrument authentication, the system is arranged to perform one of the following functions:
allowing the requested transaction, and
rejecting the requested transaction.

3. The computer-implemented secure channel payment processing system of claim 1 or 2, wherein based on the payment instrument authentication, the system is arranged to perform one of the following functions:
allowing the requested transaction, and
requesting for more information.

4. The computer-implemented secure channel payment processing system of claim 3, wherein requesting more information includes performing the fraud screen with information from the payment instrument authentication, i.e. the system is arranged to perform the fraud screen with information from the payment instrument authentication.

5. The computer-implemented secure channel payment processing system of any one of claims 1 to 4, wherein the system is arranged to perform a fraud screen.

6. The computer-implemented secure channel payment processing system of any one of claims 1 to 5, wherein the system is arranged to perform the payment instrument authentication based on a valued determined by the fraud screen.

7. The computer-implemented secure channel payment processing system of claim 6, wherein the value determined by the fraud screen is a probability of fraud.

8. A computer-implemented secure channel payment processing method comprising:
receiving, by a computer-implemented secure channel payment processing, a voice transaction request; and
performing, by the computer-implemented secure channel payment processing, a payment instrument authentication of the requested transaction.

9. The computer-implemented secure channel payment processing method of claim 8, wherein based on the payment instrument authentication, the computer-implemented secure channel payment processing system performs one of the following functions:
allowing the requested transaction; and
rejecting the requested transaction.

10. The computer-implemented secure channel payment processing method of claim 8 or 9, wherein based on the payment instrument authentication, the computer-implemented secure channel payment processing system performs one of the following functions:
allowing the requested transaction; and
requesting for more information.

11. The computer-implemented secure channel payment processing system of any one of claims 1 to 7, wherein the payment processing of the requested transaction includes real-time processing of a payment.

12. The computer-implemented secure channel payment processing system of any one of claims 1 to 7, wherein the system is arranged so that the voice transaction request can be made via a call center.

13. The computer-implemented secure channel payment processing system of any one of claims 1 to 7, wherein system is arranged so that the payment processing can be performed electronically or not electronically.

14. The computer-implemented secure channel payment processing method of any one of claims 8 to 10 wherein the voice transaction request is made via a call center.

15. The computer-implemented secure channel payment processing method of any one of claims 8 to 10, 14 wherein the payment processing is performed electronically or not electronically.
